# EUROPÄISCHE PATENTSCHRIFT

(11) **EP 1 070 637 B1**
(45) Veröffentlichungstag und Bekanntmachung des Hinweises auf die Patenterteilung: **02.03.2005**
(21) Anmeldenummer: 00115566.2
(22) Anmeldetag: 19.07.2000
(51) Int. Cl.: B60R 1/08

(54) **Rückspiegel mit schwenkbar gelagerten Teilspiegeln**
Rear view mirror with partially pivotally mounted mirrors
Rétroviseur avec des miroirs partiels montés de façon pivotable

(30) Priorität: 22.07.1999 DE 19933879
(43) Veröffentlichungstag der Anmeldung: 24.01.2001
(73) Patentinhaber: Magna Donnelly GmbH & Co. KG, 97904 Dorfprozelten (DE)
(72) Erfinder: Kaspar, Rudolf, 97903 Collenberg (DE)
(74) Vertreter: Böck, Bernhard, Dipl.-Ing.

(56) Entgegenhaltungen:
- US-A- 4 655 549
- US-A- 5 172 262
- US-A- 5 500 766
- US-A- 5 687 035
- US-A- 5 760 978

## Beschreibung

Die Erfindung betrifft einen Rückspiegel für ein Kraftfahrzeug mit den Merkmalen aus dem Oberbegriff des Anspruchs 1. Weiter betrifft die Erfindung verschiedene Verfahren zur Ansteuerung eines erfindungsgemäßen Rückspiegels.

Gattungsgemäße Rückspiegel finden in Fahrzeugen aller Art, wie beispielsweise Personenkraftwagen, Lastkraftwagen und Motorrädern, Verwendung und dienen dazu, dem Fahrer die Beobachtung des nachfolgenden Verkehrs zu ermöglichen. Grundsätzlich unterscheidet man dabei Innenrückspiegel, die im Innenraum eines Fahrzeuges angeordnet sind, und Außenrückspiegel, die außerhalb des Fahrzeuges angeordnet sind. Als Spiegelelement der bekannten Rückspiegel werden hauptsächlich Glasspiegelelemente eingesetzt.

Aus der US 5,769,978 A, der US 5,687,035 A und der US 5,172,262 A sind jeweils Rückspiegel mit jeweils mehreren Teilspiegeln bekannt, wobei die Teilspiegel durch Ansteuerung separater Antriebseinheiten unabhängig voneinander eingestellt werden können.

Ausgehend von diesem Stand der Technik ist es Aufgabe der Erfindung einen neuen Rückspiegel mit mehreren Teilspiegeln vorzuschlagen, der eine einfache Herstellung erlaubt.

Diese Aufgabe wird durch einen Rückspiegel nach der Lehre des Anspruchs 1 gelöst.

Vorteilhafte Ausführungsformen sind Gegenstand der Unteransprüche.

Eine besonders einfache Herstellung ergibt sich, wenn die Teilspiegel dünnschichttechnologisch hergestellt werden. Entsprechende Bauteile sind bereits aus dem Stand der Technik zur Verwendung in der Optoelektronik bekannt und werden üblicherweise als Digital Micromirror Device (DMD) bezeichnet. Solche Bauteile werden beispielsweise von der Firma Texas Instruments für Projektionssysteme angeboten. Dabei sind über 500 000 mikroskopische Spiegel zusammen auf einem Chip angeordnet, um ein Bild auf einen Bildschirm zu reflektieren. Derartige DMD-Chips weisen also eine Vielzahl von miniaturisierten Teilspiegeln auf, die durch auf dem Chip integrierte Antriebseinheiten verstellt werden können. Derartige DMD-Chips können zur Realisierung eines erfindungsgemäßen Rückspiegels in die Spiegelfläche des Rückspiegels integriert werden. Dabei ist es erfindungsgemäß gleichgültig, ob die gesamte Spiegelfläche oder nur ein Teil von DMD-Chips gebildet wird. Je nach Größe der zur Verfügung stehenden DMD-Chips können zur Realisierung der Spiegelfläche auch mehrere DMD-Chips nebeneinander angeordnet werden.

Besonders vorteilhaft ist es, wenn die Teilspiegel durch eine zentrale Steuereinheit koordiniert einstellbar sind. Die Steuereinheit übersetzt dabei die Steuerbefehle des Fahrers, beispielsweise die Einstellung einer Reflektionsfläche mit konvexer Spiegelcharakteristik, in entsprechende Steuerbefehle zur Einstellung der verschiedenen Teilspiegel.

Die Lagerung der Teilspiegel auf der Grundplatte ist grundsätzlich beliebig. Besonders vorteilhaft ist es, wenn die Teilspiegel durch ein elastisches Verbindungselement mit der Grundplatte verbunden sind. Das elastische Verbindungselement legt durch seine belastungsfreie Grundausrichtung die Normalstellung jedes Teilspiegels fest. Befinden sich alle Teilspiegel in der Normalstellung, kann dadurch beispielsweise eine ebene Reflektionsfläche gebildet werden. Durch die elastischen Eigenschaften des Verbindungselements wird jeder Teilspiegel nach der Auslenkung mit der zugeordneten Antriebseinheit elastisch in die Normalstellung zurückgestellt, so daß beispielsweise beim Ausfall einer oder mehrerer Antriebseinrichtungen eine Grundfunktion des Rückspiegels erhalten bleibt. Zur Anpassung des aus Teilspiegeln zusammengesetzten Spiegelelements an ein bestimmte Spiegelflächenkontur können die im Bereich des Randes des Spiegelelements angeordneten Teilspiegel teilweise oder auch vollständig von einem anderen Bauteil, beispielsweise dem Rand des Spiegelgehäuses abgedeckt werden.

Durch die Verwendung der erfindungsgemäßen Teilspiegel ist es denkbar, daß zur Einstellung des Rückspiegels zur Anpassung an die Bedürfnisses des Fahrers entsprechende aus dem Stand der Technik bekannte Spiegelverstellantriebe entfallen können, da die Einstellung mittels der erfindungsgemäßen Einstellung der Teilspiegel erfolgt. Bei Einsatz von DMD-Chips ergeben sich dabei erhebliche Gewichts- und Platzeinsparungen.

Ein weiterer Vorteil ergibt sich, wenn die Teilspiegel mit hoher Frequenz zwischen einer Reflektorstellung und einer Abblendstellung verstellt werden können, wie es beispielsweise bei DMD-Chips möglich ist. In der Reflektorstellung wird ein bestimmter Bildausschnitt in der Spiegelfläche des Teilspiegels abgebildet, wohingegen in der Abblendstellung keine sichtbare Abbildung erfolgt. Durch entsprechend hochfrequentes Hin- und Herschalten zwischen den beiden Stellungen kann ein Abblendeffekt erreicht werden, so daß beispielsweise das Scheinwerferlicht von nachfolgenden Fahrzeugen lediglich mit abgeschwächter Lichtintensität abgebildet wird. Andere Abblendeinrichtungen, wie sie bei herkömmlichen Spiegeln teilweise üblich sind, können damit entfallen. Der Abblendfaktor kann durch Variation der Schaltfrequenz eingestellt werden.

Weiterhin vorteilhaft bei der Ansteuerung der erfindungsgemäßen Teilspiegel ist es, wenn zumindest ein Teil der Teilspiegel auf ein separates Blickfeld einstellbar ist. Dadurch können beispielsweise bei Fahrten auf der Autobahn der tote Winkel auf der Fahrerseite ins Blickfeld genommen werden. Auch ist es denkbar, die Teilspiegel auf der Beifahrerseite beim Rückwärtsfahren in der Art einer Einparkhilfe zu verstellen, so daß der Randstein auf der Beifahrerseite ins Blickfeld gelangt.

Da jeder einzelne Teilspiegel für sich angesteuert werden kann, ist es auch möglich, daß die Teilspiegel in Abhängigkeit von ihrer Position auf der Grundplatte in der Art mit unterschiedlichen Winkeln eingestellt werden, so daß die Spiegelfläche insgesamt in der Art einer Fresnellinse wirkt. Die Teilspiegel bilden dabei beispielsweise konzentrische Kreise bzw. Kreisabschnitte, wobei die Teilspiegel eines Kreises oder Kreisabschnittes den gleichen Stellwinkel aufweisen und der Stellwinkel der verschiedenen Kreise bzw. Kreisabschnitte in Abhängigkeit vom Abstand zum Kreismittelpunkt variiert. Durch eine derartige Ansteuerung der Teilspiegel in der Wirkung einer Fresnellinse können Vergrößerungen oder auch Verkleinerungen eines Bildausschnittes mit entsprechendem Vergrößerungsfaktor in der Reflektionsfläche dargestellt werden.

Vorzugsweise erfolgt die Ansteuerung der Teilspiegel durch eine entsprechend programmierbare Steuersoftware.

Nachfolgend wird die Erfindung anhand lediglich ein bevorzugtes Ausführungsbeispiel darstellender Zeichnungen näher erläutert. Es zeigt:
- **Fig. 1**: einen Außenrückspiegel in Ansicht von hinten;
- **Fig. 2**: das Spiegelelement des Außenrückspiegels gemäß **Fig. 1** im Querschnitt;
- **Fig. 3**: einen Teilspiegel zur Verwendung in einem Außenrückspiegel gemäß **Fig. 1** in Ansicht von oben.

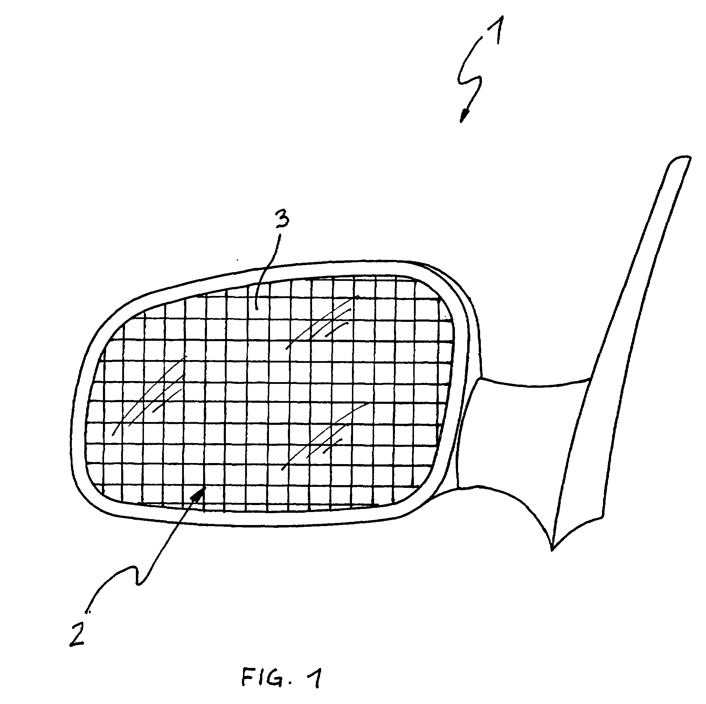

**Fig. 1** zeigt einen Außenrückspiegel 1, dessen Spiegelelement 2 aus einer Vielzahl rasterartig angeordneter Teilspiegel 3 zusammengesetzt ist. Die Größe der in **Fig. 1** dargestellten Teilspiegel ist lediglich beispielhaft dargestellt und kann in Abhängigkeit der gewünschten Funktion verkleinert oder vergrößert werden. Dabei ist es denkbar, daß ein Spiegelelement aus mehreren tausend, zehntausend oder auch mehr Teilspiegeln zusammengesetzt ist.

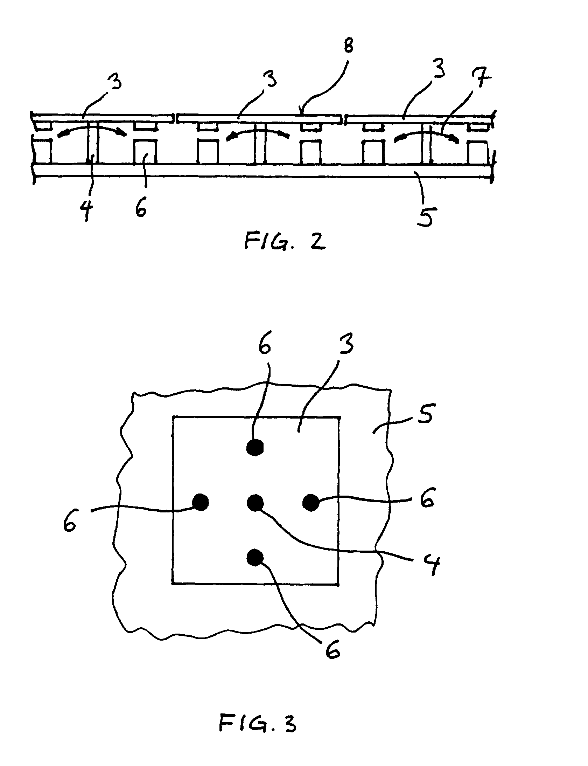

**Fig. 2** zeigt einen Ausschnitt aus dem Spiegelelement 2 im Querschnitt. Man erkennt drei Teilspiegel 3, die jeweils durch ein elastisches Verbindungselement 4 mit einer Grundplatte 5 verbunden sind. Die Reflektionsflächen 8 der Teilspiegel 3weisen in der Darstellung von **Fig. 2** nach oben. Unterhalb der Teilspiegel 3 sind jeweils vier Elektroden 6 angeordnet, von denen in **Fig. 2** jeweils nur zwei dargestellt sind. Durch Ansteuerung der Elektroden 6 können die Teilspiegel 3 gemäß der Richtungspfeile 7 verschwenkt werden, so daß sich der Reflektionswinkel ändert. Der eingestellte Reflektionswinkel kann dabei durch die an den Elektroden 6 anliegende Versorgungsspannung variiert werden. Sobald die Versorgungsspannung aller Elektroden auf Null gesetzt wird, entspannen sich die Verbindungselemente 4 und die Teilspiegel 3 werden automatisch in die Normalstellung, in der sie zusammen eine ebene Reflektionsfläche ergeben, zurückgestellt.

**Fig. 3** zeigt einen Teilspiegel 3 in Ansicht von oben, wobei die den dargestellten Teilspiegel 3 umgebenden Teilspiegel zur besseren Erkennbarkeit der Grundplatte 5 weggelassen sind. Man erkennt in **Fig. 3** das zwischen dem Teilspiegel 3 und der Grundplatte 5 angeordnete und lediglich angedeutete Verbindungselement 4 und vier dem Teilspiegel 3 zugeordnete ebenfalls angedeutete Elektroden 6. Durch koordinierte Ansteuerung der vier Elektroden 6 kann der Teilspiegel 3 um jeden Winkel um seinen Befestigungspunkt abgekippt werden. Selbstverständlich sind auch andere Antriebsprinzipien und Antriebskinematiken denkbar.

## Patentansprüche

1. Rückspiegel (1) für ein Kraftfahrzeug mit einem Spiegelelement (2) in dessen Spiegelfläche der nachfolgende Verkehr vom Fahrer beobachtet werden kann, wobei das Spiegelelement (2) aus mehreren Teilspiegeln (3) zusammengesetzt ist, wobei die Teilspiegel (3) schwenkbar gelagert auf einer Grundplatte (5) angeordnet sind und der Reflektionswinkel jedes Teilspiegels (3) durch Ansteuerung zumindest einer zugeordneten Antriebseinheit (6) verstellbar ist,
**dadurch gekennzeichnet,**
**dass** der Rückspiegel (1) zumindest ein Bauteil eines DMD-Chips, nämlich Digital Micromirror Device aufweist.

2. Rückspiegel nach Anspruch 1,
**dadurch gekennzeichnet,**
**dass** die Teilspiegel durch eine zentralen Steuereinheit koordiniert einstellbar sind.

3. Rückspiegel nach Anspruch 1 oder 2,
**dadurch gekennzeichnet,**
**dass** die Teilspiegel durch ein elastisches Verbindungselement (4) mit der Grundplatte (5) verbunden sind.

4. Rückspiegel nach einem der Ansprüche 1 bis 3,
**dadurch gekennzeichnet,**
**dass** zumindest ein Teil der im Bereich des Randes des Spiegelelements (2) angeordneten Teilspiegel (3) teilweise und/oder vollständig von einem anderen Bauteil, insbesondere dem Rand des Spiegelgehäuses abgedeckt werden.

5. Verfahren zur Ansteuerung der Teilspiegel eines Rückspiegels gemäß einem der Ansprüche 1 bis 4,
**dadurch gekennzeichnet,**
**dass** die Teilspiegel (3) des DMD-Chips mit hoher Frequenz zwischen einer Reflektorstellung und einer Abblendstellung verstellt werden, oder dass zumindest ein Teil der Teilspiegel (3) des DMD-Chips auf ein separates Blickfeld, insbesondere für den toten Winkel, einstellbar ist, oder dass die Teilspiegel (3) des DMD-Chips in Abhängigkeit von ihrer Position auf der Grundplatte (5) in der Art mit unterschiedlichen Winkeln abgelenkt werden, dass die Spiegelfläche insgesamt in der Art einer Fresnellinse wirkt.

6. Verfahren nach Anspruch 5,
**dadurch gekennzeichnet,**
**dass** die Ansteuerung der Teilspiegel durch eine Steuersoftware erfolgt.

## Claims

1. A rear view mirror (1) for a motor vehicle having a mirror element (2), in the mirror surface of which the driver may observe the traffic behind him, the mirror element (2) being composed of a plurality of component mirrors (3), the component mirrors (3) being arranged so as to be pivotally mounted on a base plate (5) and the angle of reflection of each component mirror (3) being adjustable through control of at least one associated drive unit (6),
wherein
the rear view mirror (1) comprises at least one component of a DMD chip, namely digital micromirror device.

2. A rear view mirror as claimed in claim 1,
wherein
the component mirrors are adjustable in a coordinated manner by means of a central control unit.

3. A rear view mirror as claimed in claim 1 or 2,
wherein
the component mirrors are connected by a resilient connecting element (4) to the base plate (5).

4. A rear view mirror as claimed in one of claims 1 to 3,
wherein
at least some of the component mirrors (3) disposed in the region of the edge of the mirror element (2) are partially and/or completely covered by another component, in particular by the edge of the mirror housing .

5. A method of controlling the component mirrors of a rear view mirror as claimed in one of claims 1 to 4,
wherein
the component mirrors (3) of the DMD chip are displaced at high frequency between a reflector position and an anti-dazzle position, or at least some of the component mirrors (3) of the DMD chip are adjustable to a separate field of vision, in particular for the blind angle, or the component mirrors (3) of the DMD chip in dependence upon their position on the base plate (5) are deflected at different angles such that the mirror surface as a whole acts like a Fresnel lens.

6. A method as claimed in claim 5,
wherein
control of the component mirrors is effected by means of control software.

## Revendications

1. Rétroviseur (1) pour un véhicule automobile, muni d'un élément de miroir (2) dans la surface de miroir duquel la circulation arrière peut être observée par le conducteur, l'élément de miroir (2) étant composé d'une pluralité de miroirs partiels (3), les miroirs partiels (3) étant montés à pivotement sur une plaque de base (5) et l'angle de réflexion de chaque miroir partiel (3) étant susceptible d'être réglé par commande d'au moins une unité d'entraînement (6) associée,
**caractérisé en ce que**
le miroir (1) présente au moins un composant d'une puce électrique DMD, précisément un Dispositif Numérique à Micro-Miroirs.

2. Rétroviseur selon la revendication 1,
**caractérisé en ce que**
les miroirs partiels sont réglables de façon coordonnée au moyen d'une unité de commande centrale.

3. Rétroviseur selon la revendication 1 ou 2,
**caractérisé en ce que**
les miroirs partiels sont reliés à la plaque de base (5) par un élément de liaison (4) élastique.

4. Rétroviseur selon l'une des revendications 1 à 3,
**caractérisé en ce qu'**
au moins une partie des miroirs partiels (3) disposés dans la zone du bord de l'élément de miroir (2) est couverte, partiellement et/ou complètement, par un autre composant, en particulier le bord du boîtier de miroir.

5. Procédé de commande des miroirs partiels d'un rétroviseur selon l'une des revendications 1 à 4,
**caractérisé en ce que** les miroirs partiels (3) de la puce électronique DMD sont réglés, à haute fréquence, entre une position en réflecteur et une position en occultation, ou **en ce qu'**au moins une partie des miroirs partiels (3) de la puce électronique DMD est réglable à un champ d'observation séparé, en particulier pour l'angle mort, ou **en ce que** les miroirs partiels (3) de la puce électronique DMD sont déviés en fonction de leur position sur la plaque de base (5) sous des angles différents, de manière que la surface réfléchissante agisse globalement à la façon d'une lentille de Fresnel.

6. Procédé selon la revendication 5,
**caractérisé en ce que**
la commande des miroirs partiels est effectuée au moyen d'un logiciel de commande.
